# EUROPEAN PATENT APPLICATION

(11) **EP 4 825 803 A1**
(43) Date of publication of application: **21.10.2026**
(21) Application number: 24904140.1
(22) Date of filing: 03.12.2024
(51) Int. Cl.: C01D 7/18, C01F 11/46

(54) **MANUFACTURING METHOD AND MANUFACTUARING DEVICE OF SODIUM BICARBONATE AND GYPSUM**

(30) Priority: 15.12.2023 KR 20230183929
(71) Applicant: POSCO Holdings Inc., Pohang-si, Gyeongsangbuk-do 37859 (KR); Research Institute of Industrial Science & Technology, Pohang-si, Gyeongsangbuk-do 37673 (KR)
(72) Inventor: MIN, Jung-Gi, Pocheon-si, Gyeonggi-do 11185 (KR); BYUN, Young-Chul, Gwangyang-si, Jeollanam-do 57798 (KR); LEE, Young-Bong, Gwangyang-si, Jeollanam-do 57809 (KR); KIM, Hwan-Ki, Gwangju 61135 (KR); KIM, Byung-Kee, Gwangyang-si, Jeollanam-do 57805 (KR)
(74) Representative: Pfenning, Meinig & Partner mbB
(86) International application number: PCT/KR2024/019568
(87) International publication number: WO 2025/127575

(57) **Abstract**

The present invention relates to a manufacturing method and manufacturing device of sodium bicarbonate and gypsum, comprising the steps of: injecting carbon dioxide (CO₂) and ammonia (NH₃) into a sodium sulfate solution to produce sodium bicarbonate; producing and recovering first gypsum (CaSO₄) by injecting a calcium (Ca)-containing material into a first filtrate generated in the step of producing the sodium bicarbonate; adding sodium carbonate (Na₂CO₃ to a second filtrate generated in the step of manufacturing and recovering the first gypsum and precipitating the calcium carbonate (CaCO₃), to thereby remove the Ca material and recover ammonia; and producing second gypsum having higher purity than the first gypsum by mixing the first gypsum with waste liquid generated in the step of recovering ammonia and then injecting sulfuric acid. According to the present invention, the issue of scale caused by calcium can be solved, and the costs of manufacturing sodium bicarbonate and gypsum can be reduced.

## Description

### Technical Field

The present disclosure relates to a manufacturing method and a device for manufacturing sodium bicarbonate and gypsum.

### Background Art

Sulfur oxides (SOx) are not only the main cause of acid rain, but are also harmful gases that may cause respiratory diseases when absorbed by the human body. With the development of industry, the amount of sulfur oxides discharged from various factories, thermal power plants and incinerators has increased. To minimize the amount of discharged sulfur oxides, various desulfurization methods are being applied on-site.

Currently, sintering plants at steel mills use sodium bicarbonate (sodium hydrogen carbonate, NaHCO₃) as an adsorbent to remove sulfur oxides, and to meet increasingly stringent environmental regulations, the use of sodium bicarbonate is also increasing.

When importing industrial sodium bicarbonate from overseas, the price of sodium bicarbonate imports fluctuates significantly, depending on the economic situation overseas. Furthermore, the reaction using sodium bicarbonate to remove sulfur oxides forms carbon dioxide and sodium sulfate (sodium sulfate, Na₂SO₄), but currently, these gases are landfilled, which results in increased disposal costs and secondary environmental problems.

According to the process of forming sodium bicarbonate and gypsum using sodium bicarbonate, various issues such as waste reduction, carbon neutrality, and stable supply of raw materials through internal circulation of sodium bicarbonate may be resolved, and therefore, the development of related technologies is urgently required.

### Disclosure of Invention

### Technical Problem

A manufacturing method of sodium bicarbonate and gypsum is to remove calcium included in a filtrate by adding sodium carbonate (Na₂CO₃) to precipitate calcium carbonate (CaCO₃), thereby solving the problem of equipment scale caused by calcium, and reducing the concentration of calcium ions (Ca²⁺) in a filtrate by a level that allows for operation.

### Solution to Problem

A manufacturing method of sodium bicarbonate and gypsum includes: an operation of injecting carbon dioxide (CO₂) and ammonia (NH₃) into a sodium sulfate solution to manufacture the sodium bicarbonate; an operation of manufacturing and recovering first gypsum (CaSO₄) by injecting a calcium (Ca)-containing material into a first filtrate generated in the operation of manufacturing sodium bicarbonate; an operation of injecting sodium carbonate (Na₂CO₃) into a second filtrate generated in the operation of manufacturing and recovering the first gypsum and precipitating the calcium carbonate (CaCO₃), to thereby remove calcium ions (Ca²⁺) and recover ammonia; and an operation of manufacturing second gypsum having higher purity than the first gypsum by mixing the first gypsum with waste liquid generated in the operation of recovering ammonia and then injecting sulfuric acid.

The sodium sulfate solution may be manufactured by the operation of forming a sodium sulfate solution from a raw material including sodium sulfate (Na₂SO₄).

Recovered ammonia is reintroduced into the sodium sulfate solution during the operation of manufacturing sodium bicarbonate.

The second filtrate may include 40 to 1000 ppm of calcium based on a total concentration of the second filtrate.

The sodium carbonate may be added in an amount of 0.1 to 10 wt% to the second filtrate based on a total weight of the second filtrate.

The calcium-containing material may be quicklime (CaO).

The manufacturing method of sodium bicarbonate and gypsum according to another embodiment of the present disclosure may further include, after the operation of manufacturing second gypsum, removing a Ca material by injecting sodium carbonate (Na₂CO₃) into a fourth filtrate generated in the operation of manufacturing the second gypsum to precipitate calcium carbonate (CaCO₃).

A device for manufacturing sodium bicarbonate and gypsum according to another embodiment of the present disclosure may include: a sodium bicarbonate manufacturing portion manufacturing sodium bicarbonate by receiving a sodium sulfate solution, carbon dioxide (CO₂), and ammonia (NH₃); a first gypsum manufacturing portion manufacturing first gypsum (CaSO₄) by receiving a first filtrate generated by the sodium bicarbonate manufacturing portion and a calcium (Ca)-containing material; an ammonia recovery portion receiving a second filtrate and sodium carbonate (Na₂CO₃) generated by the first gypsum manufacturing portion, precipitating calcium carbonate (CaCO₃), to thereby remove calcium ions (Ca²⁺) and recover ammonia; and a second gypsum manufacturing portion receiving and mixing a waste liquid generated by the ammonia recovery portion and the first gypsum, and then receiving sulfuric acid to manufacture second gypsum having a higher purity than the first gypsum. Advantageous Effects of Invention

According to a manufacturing method of sodium bicarbonate and gypsum, the problem of calcium-induced scale may be solved.

Furthermore, a manufacturing method of sodium bicarbonate and gypsum according to the present invention may reduce manufacturing costs of sodium bicarbonate and gypsum.

### Brief Description of Drawings

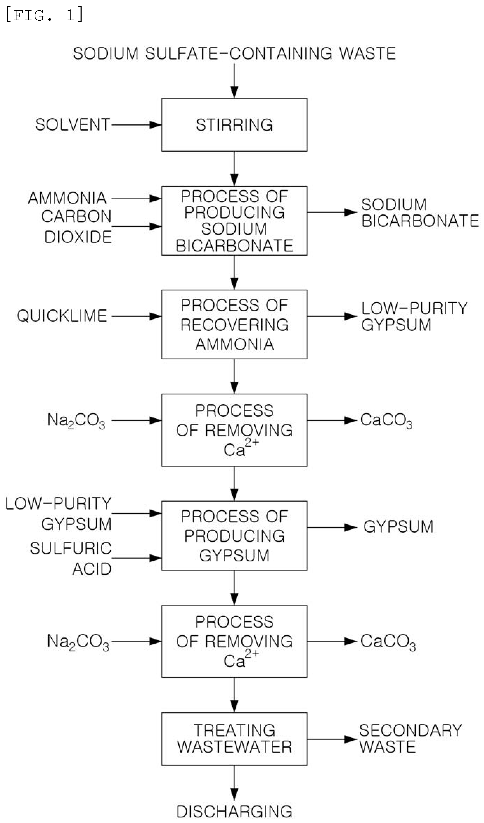

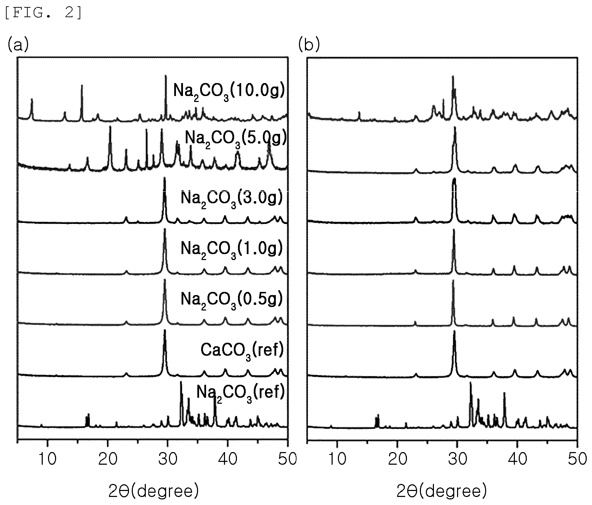

FIG. 1 is a flowchart schematically illustrating a manufacturing method of sodium bicarbonate and gypsum according to an embodiment of the present invention.
(a) of FIG. 2 illustrates results of an XRD analysis of a solid phase generated in a manufacturing method of sodium bicarbonate and gypsum according to an embodiment of the present invention.
(b) of FIG. 2 illustrates results of an XRD analysis of a solid phase generated in a manufacturing method of sodium bicarbonate and gypsum according to an embodiment of the present invention.

### Best Mode for the Invention

Hereinafter, preferred embodiments of the present invention will be described with reference to various examples. However, an example embodiment of the present invention may be modified in various other forms, and the scope of the present invention is not limited to the embodiments described below.

An aspect of the present invention relates to a manufacturing method of sodium bicarbonate and gypsum.

Exhaust gases from steel mills and sintering plants include sulfur oxides (SOx), and a reaction equation for removing sulfur oxides (SOx) using sodium bicarbonate (sodium bicarbonate, NaHCO₃) is shown in Equation 1 below. [Equation 1] 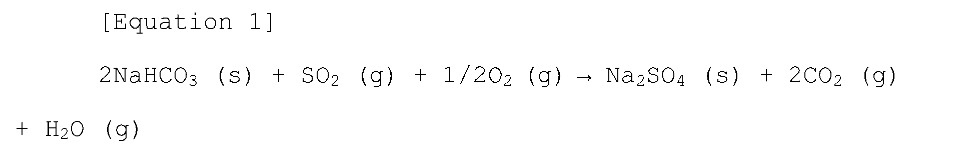 2NaHCO3 (s) + SO2 (g) + 1/2O2 (g) → Na2SO4 (s) + 2CO2 (g) + H2O (g)

As shown in Equation 1, desulfurization using sodium bicarbonate discharges carbon dioxide. Furthermore, the reaction using sodium bicarbonate to remove sulfur oxides generates sodium sulfate (sodium sulfate, Na₂SO₄). Sodium bicarbonate may be comprised of sodium and sulfate, and sodium bicarbonate may be produced as sodium bicarbonate, and sulfate may be produced as gypsum (CaSO₄).

When sodium bicarbonate is dissolved in water and carbon dioxide and ammonia are added thereto and reacted therewith, sodium bicarbonate may be produced, and when calcium-containing materials are added to resulting wastewater, gypsum may be produced.

Desulfurization waste generated by steel mill sintering plants contains calcium (Ca). Specifically, sodium bicarbonate waste from sintering plants includes about 3 wt% of calcium. The calcium ions (Ca²⁺) present in a filtrate in a sodium bicarbonate production facility cause scale to form on a wall surface of the facility, which hinders normal operations. Accordingly, to improve process operation efficiency, the concentration of calcium ions (Ca²⁺) in the solution should be reduced before the filtrate is introduced into the facility. Specifically, in a wastewater treatment process through ammonia recovery and evaporation concentration, the concentration of calcium ions (Ca²⁺) in the filtrate should be reduced to 120 ppm or less before being introduced into the facility to ensure smooth operation.

Table 1 shows calcium ion solubility (g/100 mL H₂O) in the form of calcium chloride (CaCl₂), calcium sulfate (CaSO₄), and calcium carbonate (CaCO₃) according to temperature.

**[Table 1]**

| Material | 20°C | 40°C | 60°C | 80°C |
|---|---|---|---|---|
| Calcium Chloride (CaCl₂) | 74.5 | 128 | 137 | 147 |
| Calcium Sulfate (CaSO₄) | 0.255 | 0.265 | 0.244 | 0.234 |
| Calcium Carbonate (CaCO₃) | 6.17 x 10⁻⁴ | - | - | - |

As shown in Table 1, calcium ions (Ca²⁺) have low solubility in the form of calcium carbonate (CaCO₃), thus making calcium ions (Ca²⁺) easy to precipitate. Accordingly, a material containing carbonate ions (CO₃²⁻) and having high solubility may be added to induce a reaction of Ca²⁺(aq.)+ CO₃²⁻(aq.) a CaCO₃(s).

FIG. 1 is a schematic diagram illustrating a hydrogen production device according to an embodiment of the present invention. Hereinafter, the present invention will now be described in more detail with reference to FIG. 1.

A manufacturing method of sodium bicarbonate and gypsum according to the present invention may: an operation of injecting carbon dioxide (CO₂) and ammonia into a sodium sulfate solution to manufacture sodium bicarbonate; an operation of manufacturing and recovering first gypsum (CaSO₄) by injecting a calcium (Ca)-containing material into a first filtrate generated in in the operation of manufacturing sodium bicarbonate; an operation of injecting sodium carbonate (Na₂CO₃) into a second filtrate generated in the operation of manufacturing and recovering the first gypsum and precipitating the calcium carbonate (CaCO₃), to thereby remove calcium ions (Ca²⁺) and recover ammonia; and an operation of manufacturing second gypsum by mixing the first gypsum with waste liquid generated in the operation of recovering ammonia and then injecting sulfuric acid thereinto.

According to the manufacturing method of sodium bicarbonate and gypsum of the present invention, the concentration of calcium ions (Ca²⁺) may be reduced by a level that allows for operation. Accordingly, the manufacturing costs of sodium bicarbonate and gypsum may be reduced through stable operation.

The manufacturing method of sodium bicarbonate and gypsum of the present invention includes an operation of manufacturing sodium bicarbonate by injecting carbon dioxide (CO₂) and ammonia into a sodium sulfate solution.

The sodium sulfate solution may be manufactured through an operation of forming a sodium sulfate solution from a raw material including sodium sulfate (Na₂SO₄).

The raw material including sodium sulfate may be, for example, desulfurization waste. The raw material including sodium sulfate may be dissolved in a dissolving agent and stirred to manufacture a mixture. The dissolving agent may be water. The mixture may be stirred and may be separated into solid/liquid to obtain solid desulfurization waste (primary waste) and a sodium sulfate solution.

First gypsum is low-purity gypsum, and second gypsum is high-purity gypsum with a higher purity than the first gypsum.

The manufacturing method of sodium bicarbonate and gypsum of the present invention includes an operation of manufacturing sodium bicarbonate by injecting carbon dioxide and ammonia into the sodium sulfate solution.

The manufacturing method of sodium bicarbonate and gypsum of the present invention includes an operation of manufacturing and recovering first gypsum by injecting a calcium-containing material into the first filtrate generated in the operation of manufacturing sodium bicarbonate. The calcium-containing material may be quicklime (CaO).

The manufacturing method of sodium bicarbonate and gypsum of the present invention includes an operation of injecting sodium carbonate (Na₂CO₃) into the second filtrate generated in the operation of manufacturing and recovering the first gypsum to precipitate calcium carbonate (CaCO₃), thereby removing calcium ions (Ca²⁺) and then recovering ammonia.

The manufacturing method of sodium bicarbonate and gypsum of the present invention includes an operation of mixing the first gypsum with the waste liquid generated in the operation of recovering the ammonia, and then injecting sulfuric acid thereinto to manufacture second gypsum having a higher purity than the first gypsum.

The form in which calcium is formed varies depending on the pH. When the pH is 6 or lower, calcium ions primarily exist in the form of calcium sulfate (CaSO₄) or calcium chloride (CaCl₂). When the pH is 6 or higher, the calcium ions exist in the form of calcium carbonate (CaCO₃). When the pH is 12 or higher, the calcium ions may also exist in the form of slaked lime (Ca(OH)₂). The pH of desulfurization waste is typically 9, but after manufacturing the sodium bicarbonate, the pH decreases to between 7 and 8. To recover ammonia, the pH is increased to 11 or higher by adding calcium-containing substances (such as CaO and Ca(OH)₂), so that when CO₃²⁻ containing materials are injected, a calcium carbonate (CaCO₃) production reaction may be facilitated. While various CO₃²⁻ containing materials exist, the sodium bicarbonate and gypsum production process utilizes sodium carbonate (Na₂CO₃) which may be produced by heating sodium carbonate within the process, thus optimizing operating costs.

In the manufacturing method of sodium bicarbonate and gypsum of the present invention, the ammonia recovered in the operation of recovering the ammonia may be reintroduced into the sodium sulfate solution in the operation of manufacturing the sodium bicarbonate. Environmental pollution may be prevented by recycling ammonia without disposal, thereby reducing sodium bicarbonate manufacturing costs.

The second filtrate may include about 40 to 1,000 ppm of calcium, based on the total concentration of the second filtrate.

In the manufacturing method of sodium bicarbonate and gypsum of the present invention, gypsum may be recovered from a waste solution and sodium carbonate (Na₂CO₃) may be added in amount of about 0.1 to 10 wt% based on the total weight of the second filtrate to the remaining second filtrate to precipitate calcium carbonate (CaCO₃), thereby removing calcium ions (Ca²⁺).

The manufacturing method of sodium bicarbonate and gypsum of the present invention may further include, after the operation of recovering ammonia, an operation of recovering ammonia from the waste solution and adding sulfuric acid (H₂SO₄) to the remaining filtrate to form and recover gypsum.

The manufacturing method of sodium bicarbonate and gypsum of the present invention may further include an operation of removing calcium ions (Ca²⁺) by injecting sodium carbonate (Na₂CO₃) into a fourth filtrate generated in the operation of manufacturing second gypsum to precipitate calcium carbonate (CaCO₃).

The manufacturing method of sodium bicarbonate and gypsum of the present invention may further include an operation of treating wastewater after the operation of removing calcium ions (Ca²⁺). Through the operation of treating wastewater, wastewater from which secondary waste has been removed may be discharged.

Another aspect of the present invention relates to a device for manufacturing sodium bicarbonate and gypsum.

The device for manufacturing sodium bicarbonate and gypsum of the present invention includes: a sodium bicarbonate manufacturing portion manufacturing sodium bicarbonate by receiving a sodium sulfate solution, carbon dioxide (CO₂), and ammonia (NH₃); a first gypsum manufacturing portion manufacturing first gypsum (CaSO₄) by receiving a first filtrate generated by the sodium bicarbonate manufacturing portion and a calcium (Ca)-containing material; an ammonia recovery portion receiving a second filtrate and sodium carbonate (Na₂CO₃) generated by the first gypsum manufacturing portion, precipitating calcium carbonate (CaCO₃), to thereby remove calcium ions (Ca²⁺) and recover ammonia; and a second gypsum manufacturing portion receiving and mixing a waste liquid generated by the ammonia recovery portion and the first gypsum, and then receiving sulfuric acid to manufacture second gypsum having a higher purity than the first gypsum.

### Mode for the Invention

### Inventive Example

Hereinafter, the present invention will be described in more detail with reference to inventive examples. The following inventive examples are intended to illustrate the present invention in more detail and are not intended to limit the scope of the present invention.

### Inventive Example 1

### Operation of Manufacturing Sodium Bicarbonate

100 g of desulfurized waste and 200 mL of water were added and stirred at 40°C for 1 hour to manufacture a mixture. After stirring, the mixture was separated into solid/liquid to obtain solid desulfurized waste (primary waste) and a sodium sulfate solution.

A production process of a sodium sulfate solution was repeated until 370 g of sodium sulfate solution was obtained.

70 g of a 25 to 30 wt% aqueous ammonia solution and 48.5 g of carbon dioxide were added to 370 g of produced sodium sulfate solution, and were reacted at a temperature of 40°C and at pressure of 7 bar for 4 hours to obtain a slurry in which sodium bicarbonate was generated. The slurry in which the sodium bicarbonate was generated was separated into solid/liquid to obtain a first filtrate and sodium bicarbonate.

### Operation of manufacturing First Gypsum

250 g of 25 wt% quicklime (CaO) slurry was added to the first filtrate and stirred for 1 hour. After stirring, the mixture was separated to solid/liquid to manufacture and recover the second filtrate and the first gypsum.

### Operation of Recovering Ammonia

0.5 g of sodium carbonate (Na₂CO₃) was added to 100 g of the recovered second filtrate and stirred at room temperature for 30 minutes, and then, the mixture was separated into solid/liquid, a third filtrate and a first solid phase were recovered.

The recovered third filtrate was heated to 80°C and aerated using an inert gas to recover the ammonia (NH₃) included in within the filtrate.

### Operation for Manufacturing Second Gypsum

The waste liquid from which NH₃ was removed by aeration was mixed with 100 g of the first gypsum, and then, 85 g of a 30 wt% sulfuric acid solution was slowly added and stirred for 1 hour to produce a slurry. The slurry was then separated into solid/liquid to recover the fourth filtrate and the second gypsum. 0.5 g of sodium carbonate (Na₂CO₃) was added to 100 g of recovered fourth filtrate and stirred at room temperature for 30 minutes, and the mixture was separated into solid/liquid to recover the fifth filtrate and the second solid phase.

The pH of the fifth filtrate was reduced to 6 or lower by adding 90 g of a 30 wt% hydrochloric acid solution, and then, 0.5 g of sodium carbonate (Na₂CO₃) was added to 100 g of recovered sixth filtrate and stirred at room temperature for 30 minutes. The concentration of calcium ions (Ca²⁺) of the sixth filtrate is shown in Table 4. A method of analyzing the concentration of calcium ions (Ca²⁺) was the same as a method of measuring the third filtrate.

### Inventive Examples 2 to 5

Sodium bicarbonate and gypsum were manufactured in the same manner as in Example 1, except that 1, 3, 5 and 10 g of sodium carbonate (Na₂CO₃) were added, respectively.

### Comparative Example 1

Sodium bicarbonate and gypsum were manufactured in the same manner as in Inventive Example 1, except that sodium carbonate (Na₂CO₃) was not added.

### Experimental Example

The changes in the concentration of calcium ions (Ca²⁺) in the third filtrate of Inventive Examples 1 to 5 and Comparative Example 1 are shown in Table 2. The concentration of calcium ion (Ca²⁺) was measured using an Ion Chromatography (IC) method.

An XRD analysis result of a first solid phase of Inventive Examples 1 to 5 and Comparative Example 1 are shown in (a) of FIG. 2. When an excessive amount of sodium carbonate (Na₂CO₃) is added, it may be confirmed that unreacted Na₂CO₃ and other impurities, rather than CaCO₃, are mixed in the solid phase.

**[Table 2]**

| | Amount of Na₂CO₃ added (g) | Ca²⁺ Concentration (ppm) |
|---|---|---|
| Comparative Example 1 | 0 | 430 |
| Inventive Example 1 | 0.5 | 200 |
| Inventive Example 2 | 1 | 150 |
| Inventive Example 3 | 3 | 100 |
| Inventive Example 4 | 5 | 90 |
| Inventive Example 5 | 10 | 80 |

The changes in the concentration of calcium ions (Ca²⁺) in the recovered fifth filtrate of Inventive Examples 1 to 5 and Comparative Example 1 and an XRD analysis result of the recovered second solid phase are shown in Table 3 and (b) of FIG. 2. A concentration analysis method of calcium ions (Ca²⁺) is the same as a measurement method of the third filtrate and the first solid phase.

**[Table 3]**

| | Amount of Na₂CO₃ added (g) | Ca²⁺ Concentration (ppm) |
|---|---|---|
| Comparative Example 1 | 0 | 310 |
| Inventive Example 1 | 0.5 | 180 |
| Inventive Example 2 | 1 | 120 |
| Inventive Example 3 | 3 | 90 |
| Inventive Example 4 | 5 | 90 |
| Inventive Example 5 | 10 | 90 |

In Tables 2 and 3, it may be confirmed that concentration of calcium ions (Ca²⁺) in the third filtrate and a sixth filtrate decreases as an amount of sodium carbonate (Na₂CO₃) added increases. The concentration of calcium ions (Ca²⁺) of the sixth filtrate of Inventive Examples 1 to 5 and Comparative Example 1 are shown in Table 4.

**[Table 4]**

| | Amount of Na₂CO₃ added (g) | Ca²⁺ Concentration (ppm) |
|---|---|---|
| Comparative Example 1 | 0 | 340 |
| Inventive Example 1 | 0.5 | 330 |
| Inventive Example 2 | 1 | 350 |
| Inventive Example 3 | 3 | 360 |
| Inventive Example 4 | 5 | 340 |
| Inventive Example 5 | 10 | 320 |

The analysis results in Table 4 may confirm that as pH is low, the concentration of calcium ions (Ca²⁺) in a seventh filtrate is not decreased.

While an embodiment of the present invention has been described in detail above, the scope of the present invention is not limited thereto. It will be apparent to those skilled in the art that various modifications and variations are possible without departing from the technical spirit of the present invention as set forth in the claims.

## Claims

1. A manufacturing method of sodium bicarbonate and gypsum, comprising:
an operation of injecting carbon dioxide (CO₂) and ammonia (NH₃) into a sodium sulfate solution to manufacture the sodium bicarbonate;
an operation of manufacturing and recovering first gypsum (CaSO₄) by injecting a calcium (Ca)-containing material into a first filtrate generated in the operation of manufacturing sodium bicarbonate;
an operation of injecting sodium carbonate (Na₂CO₃) into a second filtrate generated in the operation of manufacturing and recovering the first gypsum and precipitating the calcium carbonate (CaCO₃), to thereby remove calcium ions (Ca²⁺) and recover ammonia; and
an operation of manufacturing second gypsum having higher purity than the first gypsum by mixing the first gypsum with waste liquid generated in the operation of recovering ammonia and then injecting sulfuric acid.

2. The manufacturing method of sodium bicarbonate and gypsum of claim 1, wherein the sodium sulfate solution is manufactured by the operation of forming a sodium sulfate solution from a raw material including sodium sulfate (Na₂SO₄).

3. The manufacturing method of sodium bicarbonate and gypsum of claim 1, wherein recovered ammonia is reintroduced into the sodium sulfate solution during the operation of manufacturing sodium bicarbonate.

4. The manufacturing method of sodium bicarbonate and gypsum of claim 1, wherein the second filtrate includes 40 to 1000 ppm of calcium based on a total concentration of the second filtrate.

5. The manufacturing method of sodium bicarbonate and gypsum of claim 1, wherein the sodium carbonate is added in an amount of 0.1 to 10 wt% to the second filtrate based on a total weight of the second filtrate.

6. The manufacturing method of sodium bicarbonate and gypsum of claim 1, wherein the calcium-containing material is quicklime (CaO).

7. The manufacturing method of sodium bicarbonate and gypsum of claim 1, further comprising, after the operation of manufacturing second gypsum,
removing a Ca material by injecting sodium carbonate (Na₂CO₃) into a fourth filtrate generated in the operation of manufacturing the second gypsum to precipitate calcium carbonate (CaCO₃).

8. A device for manufacturing sodium bicarbonate and gypsum, comprising:
a sodium bicarbonate manufacturing portion manufacturing sodium bicarbonate by receiving a sodium sulfate solution, carbon dioxide (CO₂), and ammonia (NH₃);
a first gypsum manufacturing portion manufacturing first gypsum (CaSO₄) by receiving a first filtrate generated by the sodium bicarbonate manufacturing portion and a calcium (Ca)-containing material;
an ammonia recovery portion receiving a second filtrate and sodium carbonate (Na₂CO₃) generated by the first gypsum manufacturing portion, precipitating calcium carbonate (CaCO₃), to thereby remove calcium ions (Ca²⁺) and recover ammonia; and
a second gypsum manufacturing portion receiving and mixing a waste liquid generated by the ammonia recovery portion and the first gypsum, and then receiving sulfuric acid to manufacture second gypsum having a higher purity than the first gypsum.
